# EUROPEAN PATENT SPECIFICATION

(11) **EP 2 262 855 B1**
(45) Date of publication and mention of the grant of the patent: **24.07.2013**
(21) Application number: 08873035.3
(22) Date of filing: 29.09.2008
(51) Int. Cl.: C08K 5/00

(54) **COMPOSTABLE OLEFIN POLYMER COMPOSITIONS**
KOMPOSTIERBARE OLEFIN-POLYMER-ZUSAMMENSETZUNGEN
COMPOSITIONS DE POLYMÈRES D'OLÉFINES POUVANT ÊTRE COMPOSTÉES

(30) Priority: 07.04.2008 US 98613
(43) Date of publication of application: 22.12.2010
(73) Proprietor: BIOtech Products, LLC, Randolph NJ 07869 (US)
(72) Inventor: GROSSMAN, Richard F., Wilmington DE 19807 (US)
(74) Representative: Findlay, Alice Rosemary
(86) International application number: PCT/US2008/078097
(87) International publication number: WO 2009/126178

(56) References cited:
- WO-A-00/17270
- WO-A-01/74555
- WO-A-99/23118
- WO-A-2007/095707
- US-A- 5 108 807
- DATABASE WPI Week 200375 Thomson Scientific, London, GB; AN 2003-792851 XP002505739 & JP 2003 105182 A (NEW JAPAN CHEM CO LTD) 9 April 2003 (2003-04-09)

## Description

### FIELD OF THE INVENTION

This invention relates to compostable or biodegradable olefin polymer compositions, for example, ethylene-propylene-diene terpolymer (EPDM) and composite sheets of such polymers. Articles of such olefin polymers anaerobically biodegrade in landfills in a relatively short time.

### BACKGROUND OF THE INVENTION

For many years it has been desired to make plastic materials from polymers such as polyvinyl chloride (PVC), polyvinyl acetate (PVAc), and olefin polymers (EPDM) which are either biodegradable by microorganisms or environmentally degradable such as in a landfill. In spite of considerable efforts, landfills are becoming inundated with plastic materials, and articles made therefrom, that will not degrade perhaps for centuries. This is especially true for vinyl halide and olefin polymer materials such as PVC and EPDM that are considered non-biodegradable, that is, they persist in landfills under anaerobic conditions indefinitely without noticeable decomposition. This factor limits the acceptance of PVC and polyolefins in many products where their useful balance of properties and low cost would be attractive. An example is that of printable film and sheet. If a sample of EPDM or flexible (plasticized) PVC is tested per ASTM D 5526, Standard Test Method for Determining Anaerobic Biodegradation of Plastic Materials Under Accelerated Landfill Conditions, there is no appreciable weight loss or change in appearance after 100 days at 97ºF in contact with simulated household waste. In contrast, cellulosic polymers and other biodegradable plastics, such as polylactic acid and polycaprolactone, are completely consumed.

There has been a particular need for a compostable polymer composition for use in many end products such as polyvinyl chloride, polyvinyl acetate or olefin polymer films, banners, billboards, signs, laminates, ink jet media, diapers, hygienic pads and the like. These products must satisfy properties for practical purposes such as tear strength, tensile and impact strengths to function in many useful articles. However, the same properties that make them useful lead to their lack of biodegradability. PVC, PVAc and olefin polymers have achieved widespread usage. However, the explosive growth of such thermoplastics or elastomers has aggravated the problem of disposing of them, and has caused their accumulation in landfills. Very little of these polymeric waste products degrade in most landfills because of anaerobic conditions. The problem has become aggravated because of the shortage of landfills and municipalities are seeking to restrict the use of plastics because of their inability to degrade in landfills.

### SUMMARY OF THE INVENTION

This invention is directed to an anaerobically compostable olefin polymer composition as claimed in claim 1. In particular, olefin polymers derived from monomers of ethylene, propylene, diene, and copolymers or terpolymers thereof, have been rendered compostable by formulation with a prodegradant of an organotitianate or zirconate compound. Moreover, this invention is directed to a method of anaerobic Biodegradation of olefin polymer articles in a landfill as claimed in claim 15.

As reported in US 11/041,322 patent application, polyvinyl chloride compositions have been formulated with plasticizer and stabilizer along with the prodegradant composition. Polymeric sheets containing this composition and composites with woven or nonwoven sheets have been made compostable. Such compositions consist of (a) PVC; (b) a plasticizer selected from the group of completely aliphatic carboxylic acid esters; (c) a heat stabilizer selected from the group of sulfur-free dialkyl and monoalkytin carboxylates; and (d) a reactive organotitanate or organozirconate. As reported in the above-identified 11/747,481 patent application, further unobvious and unexpected improvements have been made. In particular, compositions of vinyl halide resins such as PVC, even without plasticizer, are compostable when the prodegradant system is employed. In addition, it has also been found that the reactive crganotitanate or organozirconate can be broadened to include other monomeric adducts in addition to the amide adduct disclosed in the above-identified 11/041,322 patent application. For instance, an ester adduct of the organotitanate or organozirconate and an organotin compound, in relative amounts, has been found to render the vinyl halide polymer composition compostable, even in the absence of a plasticizer.

This application is directed to compostable olefin polymer compositions comprising an olefin polymer and a monomeric adduct of an organotitanate, or organozirconate, as a prodegradant in relative amounts to render the olefin polymer composition compostable. As employed herein, the term "adduct" is intended to mean a complex association of the monomeric molecule and the organotitanate or organozirconate molecule. It was previously reported that amide salts of the neoalkoxy modified monoalkoxy titanate or zirconate achieved the objectives of the invention. The amide salts were defined particularly by methacrylamide as the monomeric adduct of the reactive titanate or zirconate. It has also been found that the ester adducts of the specific organotitanates or zirconates can also function in the prodegradant of this invention. The monomeric ester of the organotitanate or organozirconate adduct is exemplified by dimethylaminoethyl methacrylate. It has also been found that the dimethylaminopropyl acrylamide is as effective as the methacrylamide.

The compositions and composites of this invention, as well as useful articles made therefrom, are compostable. "Compostable" means that the composition or sheet undergoes chemical, physical, thermal and/or biological degradation such that it may be incorporated into and is physically indistinguishable from finished compost (humus) and which ultimately mineralizes (biodegrades) to CO₂, water and biomass in the environment like other known compostable matter such as paper and yard waste. The compostable films and composites are either biodegradable or environmentally degradable. "Biodegradable" means that the composition or composite is susceptible to being assimilated by microorganisms when buried in the ground or otherwise contacted with the organisms under conditions conducive to their growth. "Environmentally degradable" means that the film or layer is capable of being degraded by heat or surrounding environmental elements without microorganisms to a form that ultimately may be biodegradable when it mineralizes, for example, biodegrades to carbon dioxide, water and biomass. For purposes of this invention, "compostable" is intended to include "biodegradable" or "environmentally degradable".

Composting conditions that enable the chemical, physical, thermal and/or biological degradation of the composition or composite may vary. The compositions or composites of this invention are especially adapted to be compostable in municipal solid waste composting facilities or landfills. For example, following ASTM D 5526-94 (reapproved 2002), Standard Test Method for Determining Anaerobic Biodegradation of Plastic Materials Under Accelerated Landfill Conditions, samples of EPDM were degraded, incorporated into and physically indistinguishable in the test landfill.

Compostable olefin polymer compositions and composites of this invention, their method of manufacture and compostability will be understood with reference to the following detailed description.

### DETAILED DESCRIPTION OF THE INVENTION

### A. Olefin Polymer

The olefin polymer employed is most commonly a homopolymer, copolymer, or terpolymer of monomers such as ethylene, propylene or a diene. The principles of this invention are applicable to polymers of unsaturated hydrocarbons containing one or more pairs of carbon atoms linked by a double bond. While this invention has been illustrated with specific olefin polymers in the operating examples which follow, it is to be understood that this invention is not limited to the specific examples. The olefin monomers that may be polymerized alone or in admixture with other ethylenically unsaturated monomers include, e.g., ethylene; propylene; 1-butene; isobutene; 1-pentene; vinyl benzenes and naphthalenes such as styrene or vinyl naphthalene; and dienes such as butadiene, isoprene, cyclopentadiene, and ethylidene norbornene (ENB). Suitable elastomeric polymers may also be biodegradable or environmentally degradable. Suitable elastomeric polymers include terpolymers of ethylene, propylene, and a diene, such as ENB (EPDM). Other elastomers include poly(ethylene-butene), poly(ethylene-hexene), poly(ethylene-octene), poly(ethylene-propylene), poly(styrene-butadiene-styene), poly(styrene-isoprene-styrene), poly(styrene-ethylene-butylene-styrene), poly(ethylene-propylene-diene), and ethylene-propylene. A new class of rubber-like polymers may also be employed and they are generally referred to as polyolefins produced from single-site or metallocene catalysts whereby ethylene, propylene, styrene and other olefins may be polymerized with butene, hexene, octene, etc., to provide elastomers suitable for use in accordance with the principles of this invention, such as poly(ethylene-butene), poly(ethylene-hexene), poly(ethylene-octene), poly(ethylene-propylene) and/or polyolefin terpolymers thereof.

### B. Prodegradant Organotitanate or Organozirconate Monomeric Adducts

The prodegradant of this invention is a monomeric adduot of an organozirconate or organotitanate. The monomeric adducts are exemplified by the monomeric groups of dimethylaminopropyl acrylamide, methacrylamide, dimethylaminoethyl methacrylate, and other similar reactive monomeric groups as detailed herein. The prodegradant is defined as set as below and in the claim.

The chemical description and chemical structure of organotitanates or zirconates have been well developed. For Instance, Kenrich LICA 38J is a reactive titanate under the chemical name titanium IV neoalkanolato, tri(dioctyl) pyrophosphate-O (adduct) N-substituted methacrylamide. Furthermore, with zirconium substituted for titanium, Kenrich produces NZ 38 under the chemical description zirconium IV neoalkanolato, tri(dioctyl) pyrophosphate-O (adduct) N-substituted methacrylamide. These compounds are generally referred to as amide salts of neoalkoxy modified monoalkoxy titanate or zirconate. While the invention has been exemplified with these amide adducts of these specific organotitanates or organozirconates, it is to be understood that other similar compounds can achieve the objectives of this invention.

The K38J pyrophosphato titanium adduct is the reaction product of K38 + dimethylaminopropyl methacrylamide (DMPDMA), according to the following structure where R' = methyl, R" = propyl, R = butyl, n ∼ 3.

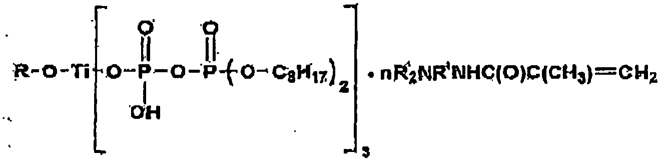

K38 = the above structure without DMPDMA. These two ingredients react rapidly at room temperature when mixed in stoichiometric proportions (close to 3:1). P-OH becomes P-O⁻ and R₂N, R₃N+. A bright red color develops, which is the thermochromic, indicating coordination of likely C=O to titanium, which displays such colors when penta-coordinate instead of tetra-coordinate. (For example, acetone•TiCl4 is orange-red, and the precursors, colorless.) Neither K38 nor DMPDMA cause depolymerization of olefin polymers when used alone. However, if added separately to the olefin polymer, the combination *in situ* is as effective as K38J. Thus, use of the term "adduct" is intended to cover the use of preformed complex or the separate addition of the components to enable their association or complexing *in situ* to provide the prodegradant effects of this invention.

A substituted methacrylamide can also be employed as an adduct of the organotitanate or zirconate. For instance, Kenrich Ken-React KR-238J is another reactive titanate where the monomeric adduct is a substituted methacrylamide. The KR-238J is a dimethylaminopropyl acrylamide which has been found to be as effective as the methacrylamide adduct of Kenrich-38J, described above. A chemical description of KR-238J is di(dioctyl)pyrophosphato ethylene titanate (adduct) N-substituted methacrylamide. Furthermore, dimethylaminoethyl methacrylate, a monomeric ester adduct, is equally effective in combination with the pyrophosphato form of the titanium or zirconium coupling agent. The K238J adduct has the chemical structure as follows:

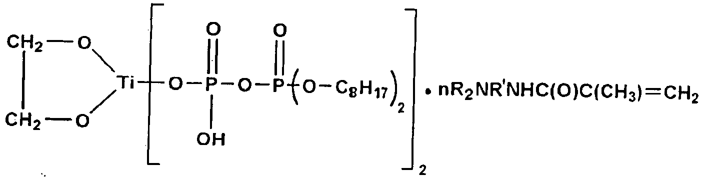

K238 = the above structure without DMPDMA. Thus, as used herein "K38 and "K238" are intended to mean the organopyrophosphato titanate portion of the adduct which is complexed with the monomeric amide, ester, or other like monomers. Specific compounds are exemplified by titanium IV neoalkanolato tri(dioctyl) pyrophosphato-O (adduct) N-substituted methacryloamide and zirconium IV neoalkanolato tri(dioctyl) pyrophosphato-O (adduct) N-substituted methacrylamide, titanium IV bis(dioctyl) pyrophosphato-O (adduct) N,N-dimethylamino-alkyl propenamide, and zirconium IV bis(dioctyl) pyrophosphato-O (adduct) N,N-dimethylamino-alkyl propenamide.

The above monomeric adducts result from salt formation via the titanate/zirconate acidic -P=O(OH) group. The monomer contains a basic functional group that will react to form a salt (but not go on to other reactions such as oxidation). A tertiary amine group is favorable. This could be a dialkyl amine group, methyl pyridine functionality or a range of basic nitrogen heterocyclic groups. The rest of the reactive momomer must contain an activated carbon-carbon double bond. The C=C bond, to be activated, should be conjugated with C=O, as in an ester, ketone, aldehyde or amide, with -CN, with oxygen as in a vinyl ether, or with oxygen, nitrogen or sulfur in an allylic linkage, or with an aromatic ring as in styrene or vinyl ferrocene.

In a more generalized form, the adducts can be defined as:
organotitanate or zirconate -P=O(OH) salt-forming group-R-C=C-activating group, where R is a hydrocarbon radical or substituted hydrocarbon radical and the activating group is conjugated with the C=C.

Other monomers of the adducts of this invention are exemplified by the following:
ethyl dimethylaminoethylmethacrylate 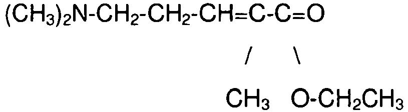
methyl dimethylaminopropyl acrylate 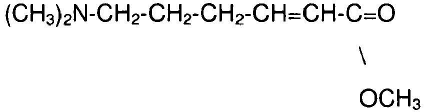
2-morpholine-N-ethyl acrylamide

   CH₂CH₂ 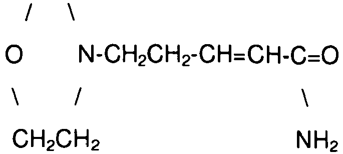
2-piperidinyl-N-ethyl acrylonitrile 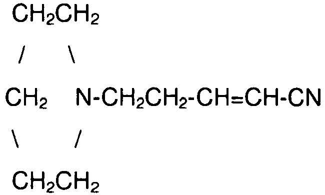
methyl N-methyl-N-ethyl-3-aminopropyl ketone 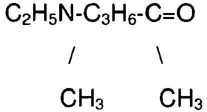
2-dimethylaminoethyl acrolein

   (CH₃)₂N-CH₂CH₂-CH=CH-CH=O
dimethylaminoethyl vinyl ether

   (CH₃)₂N-CH₂CH₂-O-CH=CH₂
dimethylaminoethyl vinyl thioether

   (CH₃)₂N-CH₂CH₂-S-CH=CH₂
4-dimethylaminomethyl styrene 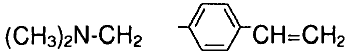
allyl 3-dimethylamino propionate 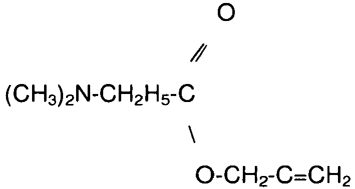
methallyl 3-dimethylamino propionate 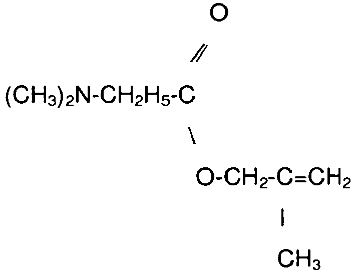
thioallyl 3-dimethylamino propionate 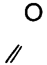 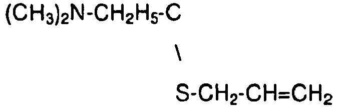
dimethylaminomethyl acrylate (reverse ester), also corresponding reverse amides 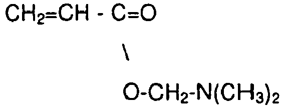
N-methyl-N-dimethylaminomethyl acrylamide

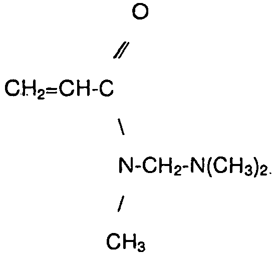

These organotitanates or zirconates are further described in considerable detail in the following US Patents: 4,069,192; 4,080,353; 4,087,402; 4,094,853; 4,096,110; 4,098,758; 4,122,062; 4,152,311; 4,192.792; 4,101,810; 4,261,913; 4,277,415; 4,338,220; 4,417,009.

### C. Prodegradant Synergistic Composition

It has been discovered that the prodegradant behavior of organotitanate or organozirconate adduct, i.e., the organopyrophosphato monomeric adduct, displays an unpredicted synergism in the compostability of olefin polymers. The remarkable compostability property exists over ranges of ratios of the essential components. The exact mechanism for the unexpected results and the compostability of olefin polymers with the prodegradant is not completely understood. Certainly there are theories which could be proposed, but regardless of theories, the beneficial results evident in the numerous examples of this invention which follow, in further view of this detailed description, speak for themselves. Applicant relies upon these empirical demonstrations of the principles of this invention to advance its merit.

With the prodegradant of this invention, it has been found that the total composition of prodegradant is useful over a range of about 1 to about 10 parts (phr) by weight based upon 100 parts by weight of the olefin polymer. The most useful range of total parts by weight of the organotin or zirconate in the total composition is on the order of about 1 to about 5 phr.

The principles of this invention and its operating parameters will be further understood with reference to the following detailed examples which serve to illustrate the types of specific prodegradants and their amounts as used in typical olefin polymer formulations and the compostabilities displayed by the prodegradant of this invention. These examples are considered to be exemplary of this invention and should not be considered as limiting, especially in view of applicant's broad disclosure of the principles of this invention.

The compostability of the olefin polymer compositions of the examples was determined by following ASTM D 5526-94 (reapproved 2002), Standard Test Method for Determining Anaerobic Biodegradation of Plastic Materials Under Accelerated Landfill Conditions. Using the standard test, a mixture was prepared comprising 60% by weight of sterilized dehydrated manure (to simulate processed household waste), at different percentages of distilled water (35% or 60%), and 10% fermenting inoculum from an active composter. Film samples of the compostable olefin polymers were run in the Examples which follow. All experiments were run at 97ºF in a dark incubator.

### Example 1

1.5 grams of Royalene 521 EPDM (Lion Copolymer) were dissolved in 50 grams toluene at 75 °C. Royalene 521 is an amorphous terpolymer of approximately 58% ethylene, 38% propylene and 4% ethylidene norbornene (ENB) having a number average molecular weight (Mn) of about 140,000 with Mw/Mn of about 2.9. After cooling to 40°C, the solution was coated on release liner to form a 2 mil film when dry. Two grams of the dried film were placed in 50 grams of a landfill composition per ASTM D5526 containing 35% water; two grams were placed in 50 grams of landfill having 60% water content. After 120 days in the landfill at 35°C, neither sample showed visible change. On removal from the landfill, washing with water and drying, sample weight was unchanged to within 1 %.

Parallel experiments were also carried out using Royalene 3275, an amorphous terpolymer containing 58% ethylene, 40% propylene and 2% ENB having Mn of about 190,000 and Mw/Mn of about 2.9. After 120 days, samples showed no visible or weight change.

### Example 2

Example 1 was repeated except that each sample contained 0.05 gram of Kenrich Lica 38J, identified above, added while the polymer was in toluene solution, and five samples were run of each variation. After 30 days landfill exposure, all samples with micro landfills having 35% water showed strong mold growth; those at 60% water, slight mold growth.

| Sample | % Water | % Weight change |
|---|---|---|
| 521 | 35 | - 12 |
| 3275 | 35 | - 8 |
| 521 | 60 | - 1-2 |
| 3275 | 60 | - 1-2 |

After 60 days, 521 (35%) had lost 27% of starting weight; 3275 (35%) had lost 20%; the samples at 60% water, about 5%.

After 90 days, 521 (35%) had become semisolid. It was removed by extraction with hexane; it had lost about 75% of starting weight and was the consistency of paraffin wax. 3275 (35%) had lost about half its original weight. The samples at 60% water appeared slightly stiffer than the originals, presumably from loss of additives and very low MW fractions. They had lost 8-10% of original weight.

After 120 days, 521 and 3275 at 35% water had vanished. Hexane extraction led to recovery of 2-3% heavy oil. The samples at 60% water were unchanged at losses of 8-10% of original weight. This was also the case after 150 days. The lack of consumption of polymer at 60% water probably indicates hydrolysis of the catalyst.

### Example 3

Example 2 was run as above but using Lica 238J, identified above. With Royalene 521, weight losses after 30, 60, 90 and 120 days were 10, 25, 70 and 98%, respectively; with 3275, 10, 22, 68 and 96%, respectively, all in landfills at 35% water. Example 2 was also run with Kenrich NZ 38J, identified above, the zirconate analog of Lica 38J, using Royalene 521 in a landfill with 35% water. Weight losses after 30, 60, 90 and 120 days were 10, 20, 63 and 95%, respectively.

### Example 4

Example 2 was run as above but using 0.1 gram Lica 38J in Royalene 521, rather than 0.05 gram. Weight losses after 30, 60 and 90 days in landfills at 35% water were 14, 32 and 78%, respectively. Samples in landfills using 60% water lost 10% after 90 days.

### Example 5

Example 2 was run as above using 0.02 gram Lica 38J in Royalene 521 in micro landfills containing 35% water. Weight losses after 30, 60, 90 and 120 days were 7, 15, 38 and 60%, respectively. After 180 days, weight loss was 68%. The unconsumed residue was a waxy solid similar to paraffin. The resistance to decomposition at 60% moisture probably indicates consumption or hydrolysis of the titanium catalyst.

### Example 6

Example 4 was run as above except that 0.1 gram Lica 38J was replaced by separate additions of 0.67 gram Lica 38 and 0.33 gram of dimethylaminopropyl methacrylamide (DMPDMA, Degussa) in Royalene 521 in a landfill containing 35% water. Weight losses after 30, 60 and 90 days were 13, 34 and 80%, respectively, within experimental error of Example 4 results.

### Example 7

Example 6 was run as above except for use of dimethylaminoethyl methacrylate (Sartomer) and Lica 38 in Royalene 521 at 35% water. Weight losses after 30, 60 and 90 days were 17, 42 and 86%, respectively. The same experiment using instead p-dimethylaminostyrene (DMAS, Degussa) at molar equivalence yielded 30, 60 and 90 day weight losses of 15, 35 and 78%, respectively. Use instead of dimethylaminopropylamino ferrocene at molar equivalence yielded weight losses almost identical to those found with p-dimethylaminostyrene.

Since none of these dimethylamino-containing monomers appears to have specific attraction to hydrocarbon polymers, it seems likely that the tertiary amine functionality is involved in activation of titanium or zirconium so as to catalyze chain scission under landfill conditions.

### Example 8

Example 2 was repeated as above with Royalene 521 except for casting a 1 instead of 2 mil film. Weight loss after 30, 60 and 90 days was 22, 50 and ∼100%, respectively, at 35% water content. At 60% water, weight loss was only slightly greater than with 2 mil films.

### Example 9

Example 2 was repeated with multiple coats of Royalene 521 to reach a 5 mil thickness. At 35% water content, weight loss after 30, 60, 90 and 120 days was 6, 13, 29 and 52%, respectively.

Examples 2-9 demonstrated the compostabilities of olefin polymer compositions in landfills under anaerobic conditions as evidenced by substantial weight loss of olefin polymer films up to about 100% over relatively short times up to about 120 days.

Having described this invention in its various embodiments and parameters, other variations will become apparent to a person of ordinary skill in the art.

## Claims

1. An anaerobically compostable olefin polymer composition comprising
an olefin polymer and
a monomeric adduct of an organotitanate or organozirconate as a prodegradant in relative amounts to render the olefin polymer composition anaerobically compostable; wherein said adduct is defined by the formula
organotitanate or zirconate -P=O(OH) salt-forming group-R-C=C-activating group, where R is a hydrocarbon radical or substituted hydrocarbon radical and the activating group is conjugated with the C=C.

2. The composition of claim 1 wherein the monomeric adduct is an amide adduct or an ester adduct.

3. The composition of claim 1 wherein the prodegradant is contained in an amount of from about 1 to about 10 phr of polymer.

4. The composition of claim 1 wherein said adduct is an organopyrophosphato adduct of a monomer selected from the group consisting of methacrylamide, substituted methacrylamide, methacrylate and substituted methacrylate.

5. The composition of claim 1 wherein said organotitanate or organozirconate is an amide or ester adduct of neoalkoxy modified monoalkoxy titantate or zirconate.

6. The composition of claim 1 wherein the olefin polymer is ethylene-propylene-diene polymer and the monomeric adduct is selected from the group consisting of titanium IV neoalkanolato tri(dioctyl) pyrophosphato-O (adduct) N-substituted methacrylamide, zirconium IV neoalkanolato tri(diociyl) pyrophosphato-O (adduct) N-substituted methacrylamide, titanium IV bis(dioctyl) pyrophosphato-O (adduct) N,N-dimethylamino-alkyl propenamide, and zirconium IV bis(dioctyl) pyrophosphato-O (adduct) N,N-dimethylamino-alkyl propenamide.

7. A compostable olefin polymer article comprising an article containing a composition of claim 1.

8. The composition of claim 1 or compostable article of claim 7 wherein the monomeric adduct is selected from the group consisting of titanium IV neoalkanolato tri(dioctyl) pyrophosphato-O (adduct) N-substituted methacrylamide, titanium IV bis(dioctyl) pyrophosphato-O (adduct) N,N-dimethylamino-alkyl propenamide, zirconium IV neoalkanolato tri(dioctyl) pyrophosphate-O (adduct) N-substituted methacrylamide, and zirconium bis(dioctyl) pyrophosphato-O (adduct) N,N-dimethylamino-alkyl propenamide.

9. The composition of claim 1 or compostable article of claim 7 wherein the olefin polymer is derived from a monomer selected from the group consisting of ethylene, propylene, a diene and copolymers or terpolymers thereof.

10. The composition of claim 1 or compostable article of claim 7 wherein the monomeric adduct is a prodegradant of a monomer selected from the group consisting of
ethyl dimethylaminoethylmethacrylate,
methyl dimethylaminopropyl acrylate,
2-morpholine-N-ethyl acrylamide,
2-piperidinyl-N-ethyl acrylonitrile,
methyl N-methyl-N-ethyl-3-aminopropyl ketone,
2-dimethylaminoethyl acrolein,
dimethylaminoethyl vinyl ether,
dimethylaminoethyl vinyl thioether,
4-dimethylaminomethyl styrene,
allyl 3-dimethylamino propionate,
methallyl 3-dimethylamino propionate,
thioallyl 3-dimethylamino propionate,
dimethylaminomethyl acrylate, and
N-methyl-N-dimethlaminomethyl acrylamide.

11. The article of claim 7 wherein the article contains an ethylene-propylene-diene (EPDM) polymer and the monomeric adduct is selected from the group consisting of titanium IV neoalkanolato tri(dioctyl) pyrophosphato-O (adduct) N-substituted methacrylamide, zirconium IV neoalkanolato tri(dioctyl) pyrophosphato-O (adduct) N-substituted methacrylamide, titanium IV bis(dioctyl) pyrophosphato-O (adduct) N,N-dimethylamino-alkyl propenamide, and zirconium IV bis(dioctyl) pyrophosphato-O (adduct) N,N-dimethylamino-alkyl propenamide.

12. A composite article comprising the article of either claim 7 or claim 11 and a compostable woven or nonwoven fabric.

13. The composite article of claim 12 wherein said woven or nonwoven fabric is a compostable fabric of a polymer selected from the group consisting of polyvinyl alcohol, polyacrylamide, polyacrylate, polymethacrylate and polyester.

14. The compostable article of claim 11 wherein the polymer is a terpolymer of ethylene, propylene and ethylidene norbornene.

15. A method of anaerobic biodegradation of an olefin article In a landfill comprising
introducing an olefin polymer article or a physically reduced form thereof into a landfill for anaerobic degradation, said article having a composition of
a olefin polymer and
a monomeric adduct of an organotitanate or organozirconate as a prodegradant in relative amounts to render the olefin polymer article compostable, and
anaerobically biodegrading said article in the landfill; wherein said adduct is defined by the formula
organotitanate or zirconate -P=O(OH) salt-forming group-R-C=C-activating group, where R is a hydrocarbon radical or substituted hydrocarbon radical and the activating group is conjugated with the C=C.

16. The method of claim 15 wherein said adduct is an organopyrophosphato adduct of a monomer selected from the group consisting of methacrylamide, substituted methacrylamide, methacrylate and substituted methacrylate.

17. The method of claim 15 wherein said olefin polymer article comprises
an olefin polymer derived from a monomer selected from the group consisting of ethylene, propylene, a diene and copolymers or terpolymers thereof and
a monomeric adduct as a prodegradant selected from the group consisting of titanium IV neoalkanolato tri(dioctyl) pyrophosphato-O (adduct) N-substituted methacrylamide, zirconium IV neoalkanolato tri(dioctyl) pyrophosphato-O (adduct) N-substituted methacrylamide, titanium IV bis(dioctyl) pyrophosphato-O (adduct) N,N-dimethylamino-alkyl propenamide, and zirconium IV bis(dioctyl) pyrophosphato-O (adduct) N,N-dimethylamino-alkyl propenamide, said prodegradant in relative amounts to render the olefin polymer article compostable.

18. The method of claim 15 wherein the monomeric adduct is an adduct of a monomer selected from the group consisting of
ethyl dimethylaminoethylmethacrylate,
methyl dimethylaminopropyl acrylate,
2-morpholine-N-ethyl acrylamide,
2-piperidinyl-N-ethyl acrylonitrile,
methyl N-methyl-N-ethyl-3-aminopropyl ketone,
2-dimethylaminoethyl acrolein,
dimethylaminoethyl vinyl ether,
dimethylaminoethyl vinyl thioether,
4-dimethylaminomethyl styrene,
allyl 3-dimethylamino propionate,
methallyl 3-dimethylamino propionate,
thioallyl 3-dimethylamino propionate,
dimethylaminomethyl acrylate, and
N-methyl-N-dimethlaminomethyl acrylamide.

## Patentansprüche

1. Anaerob kompostierbare Olefinpolymerzusammensetzung, die Folgendes umfasst:
ein Olefinpolymer und
ein monomeres Addukt eines Organotitanats oder Organozirkonats als abbauförderndes Mittel in relativen Mengen, um die Olefinpolymerzusammensetzung anaerob kompostierbar zu machen; wobei das genannte Addukt definiert ist durch die Formel
Organotitanat oder Zirkonat -P=O(OH) Salzbildungsgruppe-R-C=C-Aktivierungsgruppe, wobei R ein Kohlenwasserstoffrest oder substituierter Kohlenwasserstoffrest ist und die Aktivierungsgruppe mit dem C=C konjugiert ist.

2. Zusammensetzung nach Anspruch 1, wobei das monomere Addukt ein Amidaddukt oder ein Esteraddukt ist.

3. Zusammensetzung nach Anspruch 1, wobei das abbaufördernde Mittel in einer Menge von etwa 1 bis etwa 10 phr Polymer enthalten ist.

4. Zusammensetzung nach Anspruch 1, wobei das genannte Addukt ein organisches Pyrophosphataddukt eines Monomers ist, das aus der Gruppe bestehend aus Methacrylamid, substituiertem Methacrylamid, Methacrylat und substituiertem Methacrylat ausgewählt ist.

5. Zusammensetzung nach Anspruch 1, wobei das genannte Organotitanat oder Organozirkonat ein Amid- oder Esteraddukt von Neoalkoxy-modifiziertem Monoalkoxytitanat oder -zirkonat ist.

6. Zusammensetzung nach Anspruch 1, wobei das Olefinpolymer Ethylen-Propylen-Dien-Polymer ist und das monomere Addukt ausgewählt ist aus der Gruppe bestehend aus Titan-IV-neoalkanolat-tri(dioctyl)-pyrophosphat-O (Addukt) N-substituiertem Methacrylamid, Zirkonium-IV-neoalkanolato-tri(dioctyl)-pyrophosphat-O (Addukt) N-substituiertem Methacrylamid, Titan-IV-bis(dioctyl)-pyrophosphat-O (Addukt) N,N-Dimethylamino-alkylpropenamid und Zirkonium-IV-bis(dioctyl)-pyrophosphat-O (Addukt) N,N-Dimethylamino-alkylpropenamid.

7. Kompostierbarer Olefinpolymerartikel, der einen Artikel umfasst, der eine Zusammensetzung nach Anspruch 1 enthält.

8. Zusammensetzung nach Anspruch 1 oder kompostierbarer Artikel nach Anspruch 7, wobei das monomere Addukt ausgewählt ist aus der Gruppe bestehend aus Titan-IV-neoalkanolato-tri(dioctyl)-pyrophosphat-O (Addukt) N-substituiertem Methacrylamid, Titan-IV-bis(dioctyl)-pyrophosphat-O (Addukt) N,N-Dimethylamino-alkylpropenamid, Zirkonium-IV-neoalkanolato-tri(dioctyl)-pyrophosphat-O (Addukt) N-substituiertem Methacrylamid und Zirkonium-bis(dioctyl)-pyrophosphat-O (Addukt) N,N-Dimethylamino-alkylpropenamid.

9. Zusammensetzung nach Anspruch 1 oder kompostierbarer Artikel nach Anspruch 7, wobei das Olefinpolymer von einem Monomer abgeleitet ist, das aus der Gruppe bestehend aus Ethylen, Propylen, einem Dien und Copolymeren oder Terpolymeren davon ausgewählt ist.

10. Zusammensetzung nach Anspruch 1 oder kompostierbarer Artikel nach Anspruch 7, wobei das monomere Addukt ein abbauförderndes Mittel eines Monomers ist, das ausgewählt ist aus der Gruppe bestehend aus
Ethyldimethylaminoethylmethacrylat,
Methyldimethylaminopropylacrylat,
2-Morpholin-N-ethylacrylamid,
2-Piperidinyl-N-ethylacrylnitril,
Methyl-N-methyl-N-ethyl-3-aminopropylketon,
2-Dimethylaminoethylacrolein,
Dimethylaminoethylvinylether,
Dimethylaminoethylvinylthioether,
4-Dimethylaminomethylstyrol,
Allyl-3-dimethylaminopropionat,
Methallyl-3-dimethylaminopropionat,
Thioallyl-3-dimethylaminopropionat,
Dimethylaminomethylacrylat, und
N-Methyl-N-dimethylaminomethylacrylamid.

11. Artikel nach Anspruch 7, wobei der Artikel ein Ethylen-Propylen-Dien-(EPDM)-Polymer enthält und das monomere Addukt ausgewählt ist aus der Gruppe bestehend aus Titan-IV-neoalkanolato-tri(dioctyl)-pyrophosphat-O (Addukt) N-substituiertem Methacrylamid, Zirkonium-IV-neoalkanolato-tri(dioctyl)-pyrophosphat-O (Addukt) N-substituiertem Methacrylamid, Titan-IV-bis(dioctyl)-pyrophosphat-O (Addukt) N,N-Dimethylamino-alkylpropenamid, und Zirkonium-IV-bis(dioctyl)-pyrophosphat-O (Addukt) N,N-Dimethylamino-alkylpropenamid.

12. Verbundartikel, der den Artikel nach Anspruch 7 oder Anspruch 11 und ein(en) kompostierbares/n Gewebe oder Vliesstoff umfasst.

13. Verbundartikel nach Anspruch 12, wobei das/der genannte Gewebe oder Vliesstoff ein kompostierbarer Stoff aus einem Polymer ist, das aus der Gruppe bestehend aus Polyvinylalkohol, Polyacrylamid, Polyacrylat, Polymethacrylat und Polyester ausgewählt ist.

14. Kompostierbarer Artikel nach Anspruch 11, wobei das Polymer ein Terpolymer aus Ethylen-, Propylen- und Ethylidennorbornen ist.

15. Verfahren zum anaeroben biologischen Abbauen eines Olefinartikels in einer Deponie, das Folgendes beinhaltet:
Einleiten eines Olefinpolymerartikels oder einer physikalisch reduzierten Form davon in eine Deponie zum anaeroben Abbauen, wobei der genannte Artikel die folgende Zusammensetzung hat:
ein Olefinpolymer und
ein monomeres Addukt eines Organotitanats oder Organozirkonats als abbauförderndes Mittel in relativen Mengen, um den Olefinpolymerartikel kompostierbar zu machen, und
anaerobes biologisches Abbauen des genannten Artikels in der Deponie; wobei das genannte Addukt definiert ist durch die Formel
Organotitanat oder -zirkonat -P=O(OH) Salzbildungsgruppe-R-C=C-Aktivierungsgruppe, wobei R ein Kohlenwasserstoffrest oder substituierter Kohlenwasserstoffrest ist und die Aktivierungsgruppe mit dem C=C konjugiert ist.

16. Verfahren nach Anspruch 15, wobei das genannte Addukt ein organisches Pyrophosphataddukt eines Monomers ist, das aus der Gruppe bestehend aus Methacrylamid, substituiertem Methacrylamid, Methacrylat und substituiertem Methacrylat ausgewählt ist.

17. Verfahren nach Anspruch 15, wobei der genannte Olefinpolymerartikel Folgendes umfasst:
ein Olefinpolymer, das von einem Monomer abgeleitet ist, das aus der Gruppe bestehend aus Ethylen, Propylen, einem Dien und Copolymeren oder Terpolymeren davon ausgewählt ist, und
einem monomeren Addukt als abbauförderndem Mittel, ausgewählt aus der Gruppe bestehend aus Titan-IV-neoalkanolato-tri(dioctyl)-pyrophosphat-O (Addukt) N-substituiertem Methacrylamid, Zirkonium-IV-neoalkanolato-tri(dioctyl)-pyrophosphat-O (Addukt) N-substituiertem Methacrylamid, Titan-IV-bis(dioctyl)-pyrophosphat-O (Addukt) N,N-Dimethylamino-alkylpropenamid, und Zirkonium-IV-bis(dioctyl)-pyrophosphat-O (Addukt) N,N-Dimethylamino-alkylpropenamid, wobei das genannte abbaufördernde Mittel in relativen Mengen vorliegt, um den Olefinpolymerartikel kompostierbar zu machen.

18. Verfahren nach Anspruch 15, wobei das monomere Addukt ein Addukt eines Monomers ist, das ausgewählt ist aus der Gruppe bestehend aus:
Ethyldimethylaminoethylmethacrylat,
Methyldimethylaminopropylacrylat,
2-Morpholin-N-ethylacrylamid,
2-Piperidinyl-N-ethylacrylnitril,
Methyl-N-methyl-N-ethyl-3-aminopropylketon,
2-Dimethylaminoethylacrolein,
Dimethylaminoethylvinylether,
Dimethylaminoethylvinylthioether,
4-Dimethylaminomethylstyrol,
Allyl-3-dimethylaminopropionat,
Methallyl-3-dimethylaminopropionat,
Thioallyl-3-dimethylaminopropionat,
Dimethylaminomethylacrylat, und
N-Methyl-N-dimethylaminomethylacrylamid.

## Revendications

1. Composition de polymère d'oléfine pouvant être composté d'une manière anaérobie, comprenant :
un polymère d'oléfine et
un adduit monomère d'un organotitanate ou d'un organozirconate en tant que pro-dégradant en des quantités relatives pour rendre la composition de polymère d'oléfine compostable d'une manière anaérobie; dans laquelle ledit adduit est défini par la formule :
organotitanate ou zirconate -P=O(OH) groupe formant sel -R-C=C-groupe activant, dans laquelle R est un radical d'hydrocarbure ou un radical d'hydrocarbure substitué et le groupe activant est conjugué à C=C.

2. Composition selon la revendication 1, dans laquelle l'adduit monomère est un adduit amide ou un adduit ester.

3. Composition selon la revendication 1, dans laquelle le pro-dégradant est contenu en une quantité d'environ 1 à environ 10 phr de polymère.

4. Composition selon la revendication 1, dans laquelle ledit adduit est un adduit organopyrophosphato d'un monomère sélectionné parmi le groupe consistant en méthacrylamide, méthacrylamide substitué, méthacrylate et méthacrylate substitué.

5. Composition selon la revendication 1, dans laquelle ledit organotitanate ou organozirconate est un adduit amide ou un adduit ester de néoalcoxy monoalcoxy modifié titanate ou zirconate.

6. Composition selon la revendication 1, dans laquelle le polymère d'oléfine est un polymère d'éthylène-propylène-diène et l'adduit monomère est sélectionné parmi le groupe consistant en titane IV néoalcanolato tri(dioctyl) pyrophosphato-O (adduit) méthacrylamide N-substitué, zirconium IV néoalcanolato tri(dioctyl) pyrophosphato-O (adduit) méthacrylamide N-substitué, titane IV bis(doctyl) pyrophosphato-O (adduit) N,N-diméthylamino-alkyl-propènamide et zirconium IV bis(doctyl) pyrophosphato-O (adduit) N,N-diméthylamino-alkyl-propènamide.

7. Article en polymère d'oléfine pouvant être composté comprenant un article contenant une composition selon la revendication 1.

8. Composition selon la revendication 1 ou article pouvant être composté selon la revendication 7, dans laquelle/lequel l'adduit monomère est sélectionné parmi le groupe consistant en titane IV néoalcanolato tri(dioctyl) pyrophosphato-O (adduit) méthacrylamide N-substitué, zirconium IV néoalcanolato tri(dioctyl) pyrophosphato-O (adduit) méthacrylamide N-substitué, titane IV bis(doctyl) pyrophosphato-O (adduit) N,N-diméthylamino-alkyl-propènamide et zirconium IV bis(doctyl) pyrophosphato-O (adduit) N,N-diméthylamino-alkyl-propènamide.

9. Composition selon la revendication 1 ou article pouvant être composté selon la revendication 7, dans laquelle/lequel le polymère d'oléfine est dérivé d'un monomère sélectionné parmi le groupe consistant en éthylène, propylène, un diène et des copolymères ou terpolymères de ceux-ci.

10. Composition selon la revendication 1 ou article pouvant être composté selon la revendication 7, dans laquelle/lequel l'adduit monomère est un pro-dégradant d'un monomère sélectionné parmi le groupe consistant en :
méthacrylate d'éthyldiméthylaminoéthyle
acrylate de méthyldiméthylaminopropyle
2-morpholine-N-éthyl-acrylamide
2-pipéridinyl-N-éthyl-acrylonitrile
méthyl-N-méthyl-N-éthyl-3-aminopropyl-cétone
2-diméthylaminoéthyl-acroléine
éther de diméthylaminoéthylvinyle
thioéther de diméthylaminoéthylvinyle
4-diméthylaminométhyl-styrène
propionate d'allyl-3-diméthylamino
propionate de méthallyl-3-diméthylamino
propionate de thioallyl-3-diméthylamino
acrylate de diméthylaminométhyle, et
N-méthyl-N-diméthylaminométhyl-acrylamide.

11. Article selon la revendication 7, où l'article contient un polymère d'éthylène-propylène-diène (EPDM) et l'adduit monomère est sélectionné parmi le groupe consistant en titane IV néoalcanolato tri(dioctyl) pyrophosphato-O (adduit) méthacrylamide N-substitué, zirconium IV néoalcanolato tri(dioctyl) pyrophosphato-O (adduit) méthacrylamide N-substitué, titane IV bis(doctyl) pyrophosphato-O (adduit) N,N-diméthylamino-alkyl-propènamide et zirconium IV bis(doctyl) pyrophosphato-O (adduit) N,N-diméthylamino-alkyl-propènamide.

12. Article composite comprenant l'article selon la revendication 7 ou la revendication 11 et une étoffe tissée ou non tissée pouvant être compostée.

13. Article composite selon la revendication 12, dans lequel ladite étoffe tissée ou non tissée est une étoffe pouvant être compostée en un polymère sélectionné parmi le groupe consistant en alcool de polyvinyle, polyacrylamide, polyacrylate, polyméthacrylate et polyester.

14. Article pouvant être composté selon la revendication 11, dans lequel le polymère est un terpolymère d'éthylène, propylène et éthylidène norbornène.

15. Procédé de biodégradation anaérobie d'un article en oléfine dans une décharge, comprenant :
introduire un article en polymère d'oléfine ou une forme physiquement réduite de celui-ci dans une décharge pour dégradation anaérobie, ledit article ayant une composition consistant en :
un polymère d'oléfine et
un adduit monomère d'un organotitanate ou d'un organozirconate en tant que pro-dégradant en des quantités relatives pour rendre l'article en polymère d'oléfine compostable, et
biodégrader d'une manière anaérobie ledit article dans la décharge; où ledit adduit est défini par la formule :
organotitanate ou zirconate -P=O(OH) groupe formant sel -R-C=C-groupe activant, dans laquelle R est un radical d'hydrocarbure ou un radical d'hydrocarbure substitué et le groupe activant est conjugué à C=C.

16. Procédé selon la revendication 15, dans lequel ledit adduit est un adduit organopyrophosphato d'un monomère sélectionné parmi le groupe consistant en méthacrylamide, méthacrylamide substitué, méthacrylate et méthacrylate substitué.

17. Procédé selon la revendication 15, dans lequel ledit article en polymère d'oléfine comprend :
un polymère d'oléfine dérivé d'un monomère sélectionné parmi le groupe consistant en éthylène, propylène, un diène et des copolymères ou terpolymères de ceux-ci, et
un adduit monomère en tant que pro-dégradant sélectionné parmi le groupe consistant en titane IV néoalcanolato tri(dioctyl) pyrophosphato-O (adduit) méthacrylamide N-substitué, zirconium IV néoalcanolato tri(dioctyl) pyrophosphato-O (adduit) méthacrylamide N-substitué, titane IV bis(doctyl) pyrophosphato-O (adduit) N,N-diméthylamino-alkyl-propènamide et zirconium IV bis(doctyl) pyrophosphato-O (adduit) N,N-diméthylamino-alkyl-propènamide, ledit pro-dégradant en des quantités relatives pour rendre l'article en polymère d'oléfine dégradable.

18. Procédé selon la revendication 15, dans lequel l'adduit monomère est un adduit d'un monomère sélectionné parmi le groupe consistant en :
méthacrylate d'éthyldiméthylaminoéthyle
acrylate de méthyldiméthylaminopropyle
2-morpholine-N-éthyl-acrylamide
2-pipéridinyl-N-éthyl-acrylonitrile
méthyl-N-méthyl-N-éthyl-3-aminopropyl-cétone
2-diméthylaminoéthyl-acroléine
éther de diméthylaminoéthylvinyle
thioéther de diméthylaminoéthylvinyle
4-diméthylaminométhyl-styrène
propionate d'allyl-3-diméthylamino
propionate de méthallyl-3-diméthylamino
propionate de thioallyl-3-diméthylamino
acrylate de diméthylaminométhyle, et
N-méthyl-N-diméthylaminométhyl-acrylamide.
